Europäisches Patentamt

European Patent Office

Office européen des brevets

(11) Publication number: **0 136 017**
A2

# (12) EUROPEAN PATENT APPLICATION

(21) Application number: 84305433.9

(22) Date of filing: 09.08.84

(51) Int. Cl.⁴: **B 60 D 1/00,** B 60 S 9/00, F 16 H 1/06, B 66 C 1/00

(30) Priority: 27.08.83 GB 8323125

(71) Applicant: **Steel, James, Cairn House Farm, Dalton Newcastle Upon Tyne (GB)**

(43) Date of publication of application: 03.04.85 **Bulletin 85/14**

(72) Inventor: **Steel, James, Cairn House Farm, Dalton Newcastle Upon Tyne (GB)**

(84) Designated Contracting States: **AT BE CH DE FR GB IT LI LU NL SE**

(74) Representative: **Gordon, Richard John Albert et al, F.J. CLEVELAND & COMPANY 40-43, Chancery Lane, London WC2A 1JQ (GB)**

(54) A power drive.

(57) A power drive (10) for a tow hitch (11), (12) for attachment to a vehicle comprises a housing (11) and a component (12) co-operable therewith. The component (12) is connected to the housing (11) by means of a cable (58) so that the component (12) can be drawn from the housing (11) and connected to a trailer. A motor is then operated to rotate a spindle the effect of which is that the cable (58) is wound on the spindle and the component (12) is drawn into the housing (11) thereby hitching the trailer to the vehicle.

EP 0 136 017 A2

- 1 -

"A Power Drive"

DESCRIPTION

This invention relates to a power drive particularly, but not exclusively, for a tow hitch of a motor vehicle.

Generally, a motor vehicle is equipped for towing a trailer by being provided with a tow hitch having a member adapted to engage with a complementary member provided on the trailer.

A difficulty experienced while attempting to connect a trailer to a vehicle is manoeuvring the vehicle in a reverse direction so as to align the complementary components which are to be connected one to another on the tow hitch and the trailer. Usually, the manoeuvre is carried out by two people - the driver of the vehicle and an assistant who stands behind the vehicle and directs the driver.

It would be desirable if a trailer could be connected to a tow hitch of a vehicle without it being necessary for at least two people to be involved for safe manoeuvring since the driver of the vehicle may not be accompanied by an assitant or the assistant may be old and/or infirm or a child unable to provide adequate directions.

0136017

- 2 -

In US Patent Specification No. 3,938,122 (Magnus) it is proposed to provide a motor vehicle with a cable, an end of which is adapted to be connected to a draw bar of a trailer and the opposite end of which is wound on a pulley secured to an output shaft of a motor located at the rear of the vehicle. The cable is of electrically conductive material and is guided between two metal strips which are connected in an electric circuit of an indicator device.

The arrangement is such that the cable is unwound from the pulley and the end portion of the cable remote from the pulley is connected to the draw bar of a trailer. The vehicle then is reversed towards the trailer, the motor operating to turn the pulley and thereby draw in the cable as the vehicle moves towards the trailer.

If, during reversal of the vehicle, the cable engages either of the metal strips, the indicator device responds by providing signals to the driver indicating that the vehicle is not moving in a path to achieve coupling with the trailer and directing the driver as to how the vehicle should be controlled to move in such a path.

The apparatus necessary to carry out the proposal in US Patent Specification No. 3,938,122 includes many components and would result in the proposal being expensive to manufacture.

Another proposal is disclosed in US Patent Specification No. 2,150,010 (Solomon) wherein a housing having an internal surface of frusto-conical shape is secured to a trailer and a cable is wound onto a windlass located adjacent the housing and operable by a hand lever. A free end of the cable is guided through the housing and is adapted to be connected to a universal joint comprising part of a tow hitch of a vehicle. The universal joint is provided with a frusto-conical external surface which is complementary to the internal surface of the housing.

The arrangement is such that, when the free end of the cable is connected to the universal joint, the windlass is operated so as to wind the cable thereon and move the trailer towards the vehicle until the frusto-conical portion of the universal joint is received in the frusto conical housing.

A disadvantage of the proposal in US Patent Specification No. 2,150,010 is that the trailer attachment of the coupling must be specially adapted to cooperate with the universal joint of the tow hitch of the vehicle. Therefore, the coupling cannot be

- 4 -

mounted on a vehicle for cooperating with existing trailers having conventional tow hitches.

In GB Patent Specification No. 710,947 (Jeffes) there is disclosed a three point linkage between a tractor and a trailer. Each component of the linkage comprises a cable, one end of which has secured thereto a plug provided with an eye to be attached by a pin to an associated eye on the trailer. After connection with the trailer, the cables are moved in a direction towards the tractor, thus drawing the trailer towards the tractor until the plugs enter into corresponding tubular lift bars.

The apparatus disclosed in GB Patent Specification No. 710,947 is preferable to the proposal in US Patent Specification No. 2,150,010 special attachment is required for connecting the three point linkage of the mechanism disclosed in GB Patent Specification No. 710,947 to a trailer, but the linkage disclosed in GB Patent Specification No. 710,947 would be wholly unsuitable for attachment to a motor vehicle because such vehicles generally are not provided with a three point linkage.

It is desirable, therefore, to provide a power drive which is sufficiently compact to be attached to a motor vehicle without being obtrusive, and yet which provides sufficient power to wind a cable connected to a heavy trailer.

The invention is characterised in that means for transmitting drive from a drive shaft to a winding member includes co-operable drive members and a device for selectively effecting a co-operation of and non-co-operation of said drive members.

Following is a description, by way of example only and with reference to the accompanying drawings, of one method of carrying the invention into effect.

In the drawings:-

Figure 1 is a diagrammatic perspective view of one embodiment of a power drive in accordance with the present invention wherein the embodiment is shown attached to a vehicle but is not in use,

Figure 2 is a view similar to Figure 1 showing the embodiment being prepared for attachment to a trailer,

Figure 3 is a longitudinal cross-section, when seen from above, of a housing of the device as shown in Figure 2,

Figure 4 is a diagrammatic representation of a vehicle jack adapted to cooperate with a power drive in accordance with the present invention, and

Figure 5 is a diagrammatic representation of a block splitter adapted to cooperate with a power drive in accordance with the present invention.

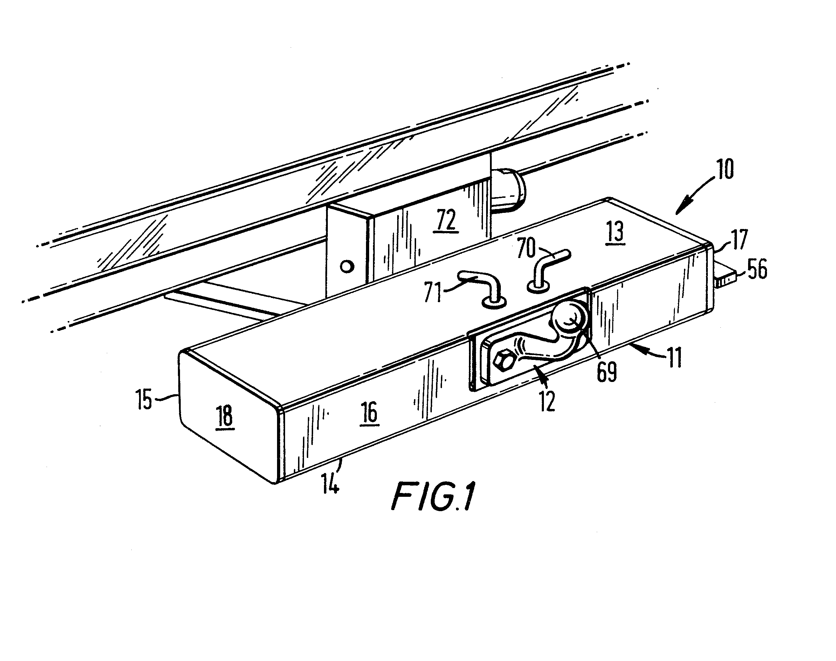

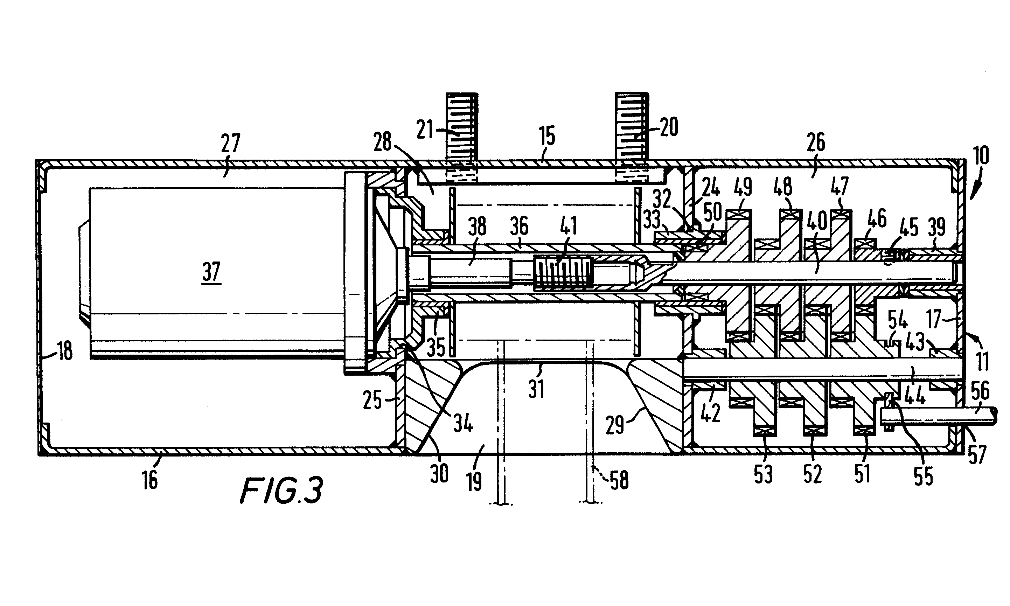

Referring now to Figures 1 to 3 of the drawings, there is shown a power drive 10 comprising a housing 11 and a component 12.

The housing 11 is substantially rectangular in plan, side and end elevations and comprises an upper panel 13, a lower panel 14, a front panel 15, a rear panel 16, and end panels 17, 18. The rear panel 16 is provided with a rectangular aperture 19 for receiving the component 12. The front panel 15 is provided with a pair of forwardly extending spaced substantially parallel bolts 20, 21. The upper panel 13 and the lower panel 14 are each provided with a pair of spaced apertures 22, 23 located inwardly of the aperture 19.

The housing 11 is provided with two internal cross walls 24, 25 providing end compartments 26, 27 and an intermediate compartment 28. The aperture 19 provides an opening to the intermediate compartment 28, there being inwardly tapering opposite facing side walls 29, 30 defining the opening. Inner portions of the side walls 29, 30 are connected by a bridge 31 having a pair of substantially parallel bores (not shown), the longitudinal axes of which extend parallel to the end panels 17, 18.

The cross wall 24 is provided with an aperture 32 in which is located a bush 33. The cross wall 25 is provided with an aperture 34 in which is located a bush 35. The bushes 33, 35 have located therein opposite end portions of a tubular spindle 36 so that the spindle 36 is rotatable on a longitudinal axis thereof relative to the bushes 33, 35.

The end compartment 27 has located therein an electric motor 37 which is clamped to the cross wall 25 so that a shaft 38 thereof extends into the tubular spindle 36.

The compartment 26 is provided with a bush 39 extending inwardly from the end panel 17 and in which is rotatably mounted an end portion of a drive shaft 40, an opposite end portion of the shaft extending into the tubular spindle 36 towards the shaft 38 of the motor 37 and being connected to the drive shaft 38 so as to be driven therefrom on operation of the motor by means of cooperating threads 41 on the motor shaft 38 and the drive shaft 40. The cross wall 24 and the inner surface of the end panel 17 are each provided with additional bushes 42, 43 for rotatably mounting end portions of a layshaft 44. The drive shaft 40 has secured thereto by means of a grub screw 45 a gear 46. The drive shaft 40 has located thereon three idler gears 47, 48, 49 being arranged in a series in a direction towards the motor 37. The idler gear 49 is provided with teeth 50 for engaging complementary teeth located at an end portion of the tubular spindle 36 remote from the motor 37. The layshaft 44 has located thereon idler gears 51, 52 and 53 extending in series in a direction from the end panel 17 towards the cross wall 24. The idler gear 51 is provided with a circumferential recess 54 which is engaged by a radially extending peg 55 located at one end of a control arm 56 extending through an aperture 57 in the panel 17.

The spindle 36 has secured thereto opposite end portions of a cable 58 such that the cable extends from the tubular spindle 36 through one of the bores in the bridge 31, through an aperture (not shown) in the component 12 and through the second of the bores (not shown) in the bridge 31 thereby forming a loop in relation to the spindle 36. The arrangement is such that, on rotation of the spindle 36 on a central longitudinal axis thereof, the looped cable 58 is wound thereon, the cable passing through the bores in the bridge 31 and drawing the component 12 into the aperture 19.

The component 12 comprises a block having an upper surface 59, a lower surface 60, a front surface 61, a rear surface 62 and end surfaces 63, 64. The block is provided with a pair of bores 65, 66 extending therethrough from the upper surface 59 to the lower surface 60. The front surface 61 is provided with a recess 67 which is complementary in configuration to the bridge 31 of the housing 11. The end surfaces 63, 64 taper towards one another in a direction away from the rear surface 62, the taper corresponding to the taper of the side walls 29, 30 of the opening of the housing 11. The rear surface 62 of the block has secured thereto a plate 68 having an upstanding hook 69 integral therewith.

The arrangement is such that, as the spindle 36 is rotatably driven by the motor 37 to wind the cable 58 thereon, the component 12 is moved by the cable towards the housing 11 and is received in the housing through the aperture 19 whereby the end surfaces 63, 64 of the component 12 engage the corresponding tapering side walls 29, 30 of the opening and the bridge 31 is located in the recess 67 of the component 12. Extending in the opening of the housing 11 is a limit switch (not shown) included in an electric circuit for controlling operation of the motor 37. The limit switch is actuated as the component 12 moves inwardly to a position in the housing 11 at which the component 12 is retained in the housing causing electric power to the motor to be switched off. The location of the bores 65, 66 on the component 12 is such that, when the component is located in the opening of the housing 11, the bores 65, 66 are in register with the apertures 22, 23 in the upper and lower panels 13, 14 of the housing 11. The component 12 thus is located in the housing 11 such that the only possible movement of the component 12 relative to the housing 11 is in a direction outwardly from the housing 11. Such movement is restrained by insertion of pins 70, 71 through the apertures 22, 23 of the housing 11 and the bores 65, 66 of the component 12, as shown in Figure 1.

The housing 11 is secured to a bracket 72 located on a rear lower surface of a motor vehicle, the attachment being made by inserting the bolts 20, 21 through apertures (not shown) provided in the bracket 72 and fastening the bolts thereto by means of nuts (not shown) threaded on the bolts. Power is supplied to the motor 37 from an electrical supply provided on the vehicle and control of the supply is effected by means of a controller 73 removably connected to a terminal 74 located adjacent the bracket 72.

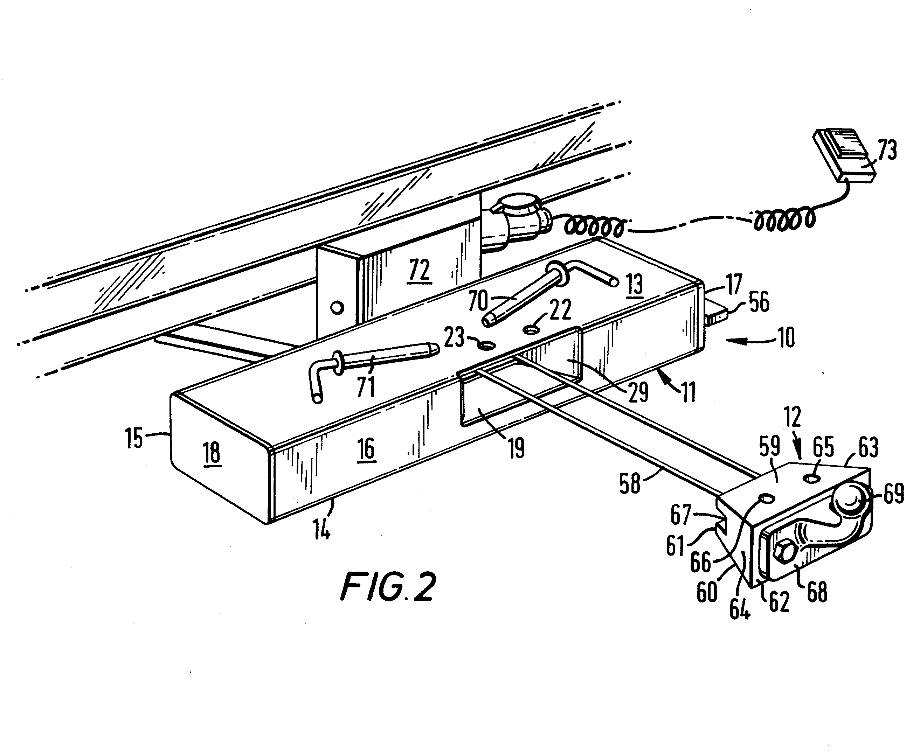

In use, a trailer (not shown) is connected to a motor vehicle having the power drive 10 located on the rear lower surface thereof, as shown in Figure 1, by reversing the motor vehicle to a location such that the rear of the vehicle is spaced a short distance from a tow hitch of the trailer. The pins 70, 71 are removed from the housing 11 and the control arm 56 is operated to move the gear 51 towards the end panel 17 and thereby disconnect drive between the motor 37 and the spindle 36. The component 12 then is drawn in an outward direction from the housing 11, as shown in Figure 2, thereby also drawing the cable 58 outwardly from the housing 11, the spindle 36 rotating on a central longitudinal axis thereof as the cable 58 is unwound from the spindle. The ball portion of the hook 69 is engaged with a complimentary cup portion of the tow hitch of the trailer.

The control arm 56 then is operated so that the gear 51 is moved away from the end panel 17 and engages with the gears 46 and 47 located on the shaft 40. The controller 73 then is operated causing the motor 37 to provide motive power for rotating the spindle 36 on the central longitudinal axis thereof in an opposite direction to that in which the spindle 36 rotated on the axis when the cable 58 was drawn outwardly from the housing 11. Drive from the motor 37 to the spindle 36 is affected by torque transmitted from the drive shaft 38, the shaft 40, the gears 46, 51, 47, 52, 48, 53, 49 and 50 whereby the cable 58 is wound on the spindle 36 drawing the component 12 and the trailer connected thereto towards the housing 11.

The movement of the component 12 inwardly through the aperture 19 of the housing 11 as the tapered surfaces 63, 64 thereof contact the corresponding tapering surfaces 29, 30 of the compartment 28 effects operation of the limit switch (not shown) whereby power to the motor 37 is switched off.

The pins 70, 71 then are inserted through the apertures 22, 23 of the housing 11 and the bores 65, 66 of the component 12, as shown in Figure 1.

The component 12 therefore is firmly retained in the housing 11 and the trailer thereby is connected to the motor vehicle.

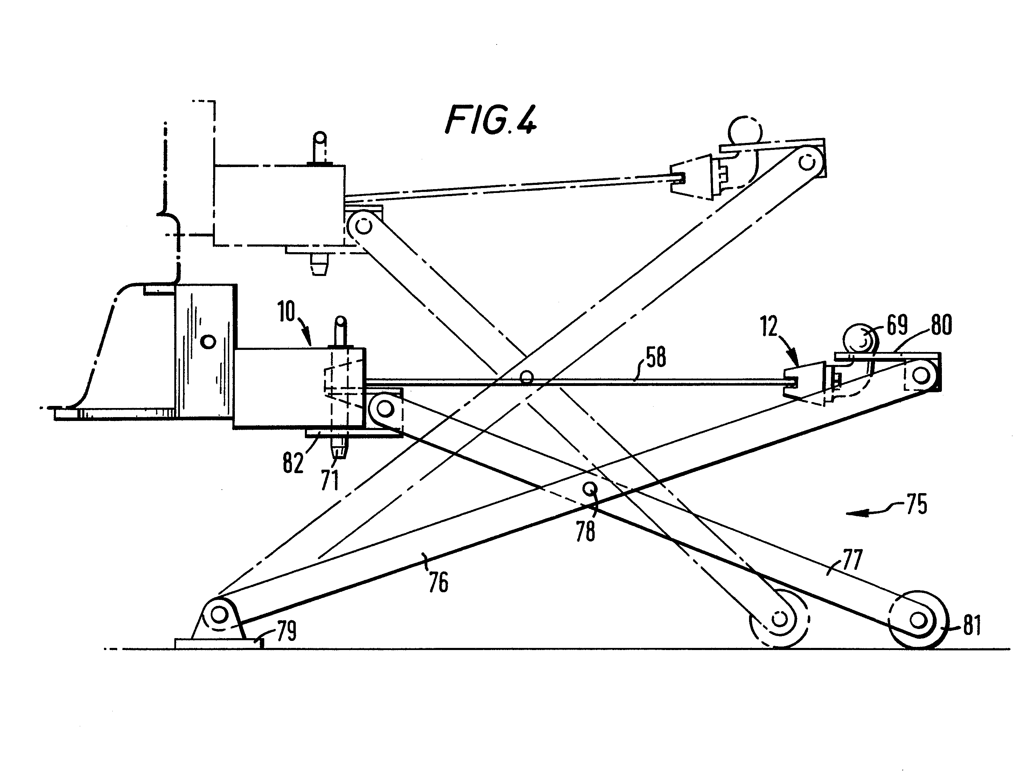

Referring now to Figure 4 of the drawings, there is shown a vehicle jack 75 adapted for use with the power drive 10.

The vehicle jack comprises a pair of elongate members 76, 77 which are pivotally connected one to another so as to pivot relative one to another about a pivot axis 78. The elongate member 76 has pivotally connected to one end portion thereof a base member 79 and pivotally connected to an opposite end portion thereof a plate 80 having an aperture (not shown) therein. The elongate member 77 has rotatably mounted at a lower end portion thereof a wheel 81 and has pivotally connected to an opposite end portion thereof a bracket 82 adapted to engage the housing 11 of the power drive 10. The bracket 82 is provided with apertures (not shown) for receiving lower end portions of the pins 70, 71.

In use, the jack 75 is positioned so that the base member 79 is located on ground below the power drive 10 attached to the rear of a vehicle and the bracket 82 is connected to the housing 11 by means of the pins 70, 71. The component 12 of the power drive 10 is released, drawn from the housing 11 and the hook 69 thereof is inserted upwardly through the aperture of the plate 80. The power drive 10 is then operated such that the component 12 is drawn towards the housing 11. In consequence, the upper end portions of the elongate members 76, 77 are moved towards one another, the elongate member 76 pivoting

- 14 -

0136017

about the base member 79 towards the housing 11 and the elongate member 77 pivoting such that the roller 81 rolls along the ground towards the base member 79. The height of the jack 75 is thus increased from the position shown in full lines in Figure 4 to the position shown in chain dotted lines in Figure 4 with a result that the rear of the vehicle is raised from the ground.

The vehicle is lowered by operating the controller 73 so as to control the motor 37 to reverse the direction of rotation of the shaft 38 with the result that the cable 58 is paid out whereby the elongate members 76, 77 pivot relative one to another from the position shown in chain dotted lines in Figure 4 to the position shown in full lines in Figure 4.

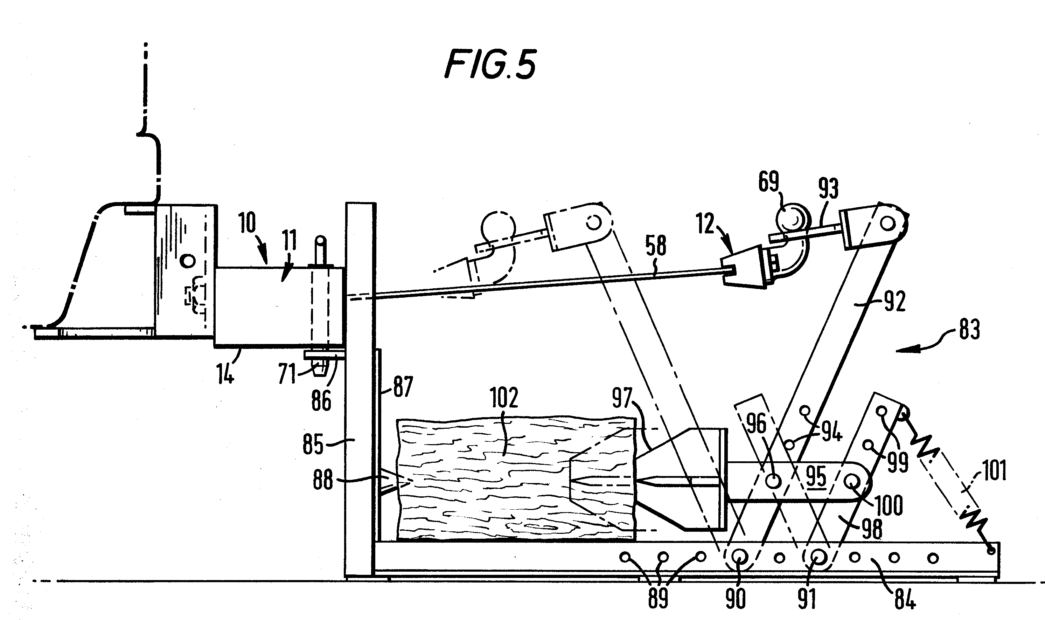

Referring now to Figure 5 of the drawings, there is shown a block splitter 83 adapted for use with the power drive 10.

The block splitter 83 comprises an elongate base member 84 and a frame 85 upstanding from one end portion of the base member 84. The frame 85 is provided with a forwardly extending flange 86 located at a height above the base member 84 such that, when frame 85 is located adjacent the housing 11 of the power drive 10, the flange 86 extends below and adjacent the lower panel 14 of the housing 11. The flange 86 is provided with a pair of apertures (not shown) each for receiving a lower end portion of a corresponding one of the pins 70, 71. The frame 85 is provided with a lower plate 87 having a spike 88 extending therefrom in an opposite direction from the flange 86. The base member 84 is provided with a series of apertures 89 each of which is adapted to receive a pin 90, 91. The pin 90 pivotally connects a lower end portion of an elongate member 92 to the base member 84 and is inserted in a selected one of the apertures 89. An upper end portion of the elongate member 82 is pivotally connected to a link 93 having an aperture (not shown) therein adapted to receive the hook 69 of the component 12 of the power drive 10. The elongate member 92 is provided with a row of apertures 94 extending longitudinally of the elongate member 92.

An elongate link 95 is pivotally connected intermediate its ends by way of a pin 96 located in a selected one of the apertures 94 in the elongate member 92. The link 95 is provided at an end portion thereof nearest the spike 88 with a blade 97 which is tapered towards the spike. The link 95 has pivotally

- 16 -

connected thereto at the end portion thereof remote from the blade 97 an elongate arm 98. A lower portion of the arm 98 is pivotally connected to the base member 79 by means of the pin 91 located in one of the apertures 89. The arm 98 is provided with a row of apertures 99 extending in a longitudinal direction of the arm 98. The link 95 is pivotally connected to the arm 98 by means of a pin 100 located in a selected one of the apertures 99. An upper end portion of the arm 98 has secured thereto one end of a tension spring 101 an opposite end portion of the spring being secured to the base member 84. The block splitter is intended for splitting blocks 102, such as logs.

In use, the block splitter 83 is located adjacent a power drive 10 secured to a vehicle such that the frame 85 abuts the rear panel 16 of the housing 11 of the power drive 10 and the apertures of the flange 86 have located therein the pins 70, 71. The elongate member 92 and the arm 98 maintained at an angle inclined away from the frame 85 due to the force of the tension spring 101.

A block 102 is located on the base member 84 so that an end face of the block 102 is elongated by the spike 88.

The component 12 then is drawn away from the housing 11 and the hook 69 is inserted upwardly through the aperture in the link 93. The motor 37 is is operated to wind in the cable 58 whereby the elongate member 92 and the arm 98 are pivoted about their respective pins 90, 91 against the bias of the spring 101 towards the frame 85 until the blade 97 engages an opposite end wall of the block 102 remote from the spike 88. The controller 73 then is operated to switch off power to the motor 37 so that final adjustment of the position of the block 102 relative to the block splitter 83 can be made. The block splitter 83 is then in a position shown in full lines in Figure 5.

The controller 73 then is operated to control the motor 37 to wind the cable 58 inwardly of the housing 11 with the result that the elongate member 92 and the arm 98 pivot towards the position shown chain dotted lines in Figure 5. The effect of so moving the elongate member 92 and the arm 98 is to apply a progressively increasing force by the blade 97 towards the spike 88 with a result that the block 102 is split.

The operation of the motor 37 then is reversed whereby tension in the cable 58 is released and the elongate member 92 and the arm 98 are pivoted relative to their corresponding pins 90, 91 away from the frame 85 thereby permitting the split portions of the block 102 to be removed.

It will appreciated that the elongate member 92 and the arm 98 may be selectively positioned longitudinally of the base member 84 by selectively locating the respective pins 90, 91 in corresponding apertures 89. It will also be appreciated that the link 95 may be positioned selectively at locations spaced one from another longitudinally of the elongate member 92 and the arm 98 by selectively locating the pins 96, 100 in corresponding apertures 94, 99. The position of the blade 97 thus may be adjusted in a longitudinal direction of the base member 84 and in a direction upwardly from the base member 84. Also, the plate 87 may be slidable in an upward direction of the frame 85. Such adjustment of the blade 97 and the spike 88 provides for location of blocks 102 of varying longitudinal and upward dimensions.

- 19 -                                    0136017

CLAIMS

1.      A power drive for winding a cable comprising a winding member rotatable on an axis thereof, a shaft, a motor for supplying motive power to the shaft and means for transmitting drive from the shaft to the winding member to effect rotation of the winding member on the axis and thereby wind the cable on the winding member characterised in that the said means includes co-operable drive members and a device for selectively effecting co-operation of and non-co-operation of said drive members.

2.      A power drive as claimed in Claim 1 characterised in that at least one of said co-operable members is located in an auxiliary shaft co-axial with the said axis.

3.      A power drive as claimed in Claim 2 characterised in that the motor and the said means are loated adjacent opposite end portions of the said axis.

4.       A power drive as claimed in Claim 3 characterised in that the motor, the winding member and the said means are located in a housing having an aperture therein and the cable has attached thereto a component adapted to be received in the aperture such that the component is movable relative to the housing only in directions inwardly of and outwrdly from the aperture.

5.       A power drive as claimed in Claim 4 characterised in that there is provided an additional component adapted to be removably connected with the said component.

6.       A power drive as claimed in Claim 5 characterised in that the additional component comprises a vehicle jack including a pair of elongate members pivotally connected one to another, an end portion of one of the members being pivotally connected to a first connecting member adapted to engage the housing and an end portion of the other of the members being pivotally connected to a second connecting member adapted to engage the said component so that, when the first connecting member engages the housing, the second connecting member engages the said component and the cable is wound on the cylindrical member, the elongate members pivot relative one to another causing the first connecting member to apply an upward force to the housing.

7. A power drive as claimed in Claim 6 characterised in that the elongate member having the first connecting member is provided at an end portion thereof remote from the first connecting member with a roller.

8. A power drive as claimed in Claim 5 characterised in that the additional component comprises a block splitting device including a first elongate member, a first connecting member upstanding from the first elongate member and adapted to engage the housing, a second elongate member an end portion of which is pivotally connected to the first elongate member at a location spaced from the first connecting member, the second elongate member having pivotally connected thereto at an end portion thereof remote from the first elongate member a second connecting member adapted to engage the said component and having pivotally connected thereto intermediate the said end portions a tapered member so that, when the cable is wound on the cylindrical member, the tapered member moves towards the first connecting member effecting splitting of a block located between the first connecting member and the tapered member.

9.     A power drive as claimed in Claim 8 characterised in that the location of the second elongate member relative to the first elongate member is selectively adjustable in a longitudinal direction of the first elongate member.

10.     A power drive as claimed in Claim 8 or Claim 9 characterised in that there is provided resilient means for biasing the second elongate member away from the first connecting member.

0136017

*FIG.1*

0136017

FIG.2

0136017

FIG.3

*FIG.4*

0136017

FIG.5

5/5

0136017